# EUROPÄISCHE PATENTSCHRIFT

(11) **EP 2 085 336 B1**
(45) Veröffentlichungstag und Bekanntmachung des Hinweises auf die Patenterteilung: **23.03.2011**
(21) Anmeldenummer: 09100061.2
(22) Anmeldetag: 22.01.2009
(51) Int. Cl.: B65G 47/54, B65G 57/00, B41F 21/00

(54) **Vorrichtung zum Transport einer Palette**
Pallet transport device
Dispositif de transport d'une palette

(30) Priorität: 04.02.2008 DE 102008007613
(43) Veröffentlichungstag der Anmeldung: 05.08.2009
(73) Patentinhaber: Heidelberger Druckmaschinen Aktiengesellschaft, 69115 Heidelberg (DE)
(72) Erfinder: Detmers, Andreas, 68542, Heddesheim (DE); Schmitt, Georg, 67281, Kirchheim (DE)

(56) Entgegenhaltungen:
- EP-A1- 1 153 745
- AT-B- 326 559
- US-A- 3 757 971

## Beschreibung

Die Erfindung betrifft eine Vorrichtung zum Transport einer Palette, auf welcher ein Bogenstapel angeordnet ist, der einer Bogen verarbeitenden Maschine zugeführt werden soll.

Zur Belieferung von Bogen verarbeitenden Maschinen, insbesondere Druckmaschinen, sind Fördersysteme vorgesehen, die z. B. aus mehreren nebeneinander angeordneten Rollensystemen bestehen, die zusammen eine Rollenbahn bilden. Ein zur Verarbeitung vorgesehener Bogenstapel wird auf einer Palette angeordnet, mittels eines Hubwagens auf die Rollenbahn aufgesetzt und daraufhin dem Anleger einer Bogen verarbeitenden Maschine zugeführt.

Ein derartiges Fördersystem ist z. B. durch die DE 101 22 428 A1 bekannt. Diese zeigt eine Bogen verarbeitende Maschine mit einem Bogenanleger und einer Förderstrecke, mittels welcher dem Bogenanleger seitlich ein auf einer Palette angeordneter Bogenstapel zuführbar ist. Die Förderstrecke weist neben dem Anleger eine Bogenstapelvorausrichtstation und einen Übergabeförderer auf. Der Übergabeförderer weist eine Aufnahme für Tragelemente des Hubwagens auf, welche in Transportrichtung der Palette angeordnet ist.

Bei der Verarbeitung von Bogenformaten, die kleiner als das Palettenformat sind, müssen diese für eine spätere Ausrichtung des Bogenstapels außerzentrisch auf der Palette angeordnet sein. Diese Maßnahme führt jedoch zu einer ungünstigen Gewichtsverteilung des Stapels auf der Palette und kann im schlimmsten Fall zu einem Kippen des Hubwagens führen.

Die EP 1153745 A1 zeigt in Figur 1 ein Fördermittel, gemäß dem Oberbegriff des Anspruchs 1, welches in Abstandsbereichen zwischen zwei Rollen einer Zuführrollenbahn parallel zu den Rollen angeordnet ist.

Der Erfindung liegt die Aufgabe zugrunde, einen Übergabeförderer zu schaffen, der quer zur Palettentransportrichtung belieferbar ist und eine gute Abstützung der Palette bietet.

Die Aufgabe wird erfindungsgemäß durch die Merkmale des Anspruchs 1 gelöst.

Es ist ein besonderer Vorteil der Erfindung, dass der Übergabeförderer eine quer zur Richtung der Palettentransportstrecke ausgerichtete Aufnahme für eine Palette tragende Tragelemente, z. B. eine Hubwagengabel, aufweist. Durch diese Maßnahme können Bogenstapel sicher aufgenommen werden, die ein kleineres Format aufweisen, als die sie tragende Palette.

Auf diese Weise kann die Bogen verarbeitende Maschine in vorteilhafter Weise mit einer Standardpalette für alle Bogenformate betrieben werden.

Im Bereich der Aufnahme sind verkürzte Rollen angeordnet. Durch diese Maßnahme wird die Palette auch im Bereich der Aufnahme gut abgestützt. Vorzugsweise werden ständig sieben von neun Stützfüßen der Palette von den Transportrollen des Übergabeförderers abgestützt. Sämtliche Transportrollen des Übergabeförderers weisen einen vorzugsweise gemeinsamen Antrieb auf.

Ein Ausführungsbeispiel der Erfindung ist in den Zeichnungen dargestellt und wird im Folgenden beschrieben.

Es zeigen:

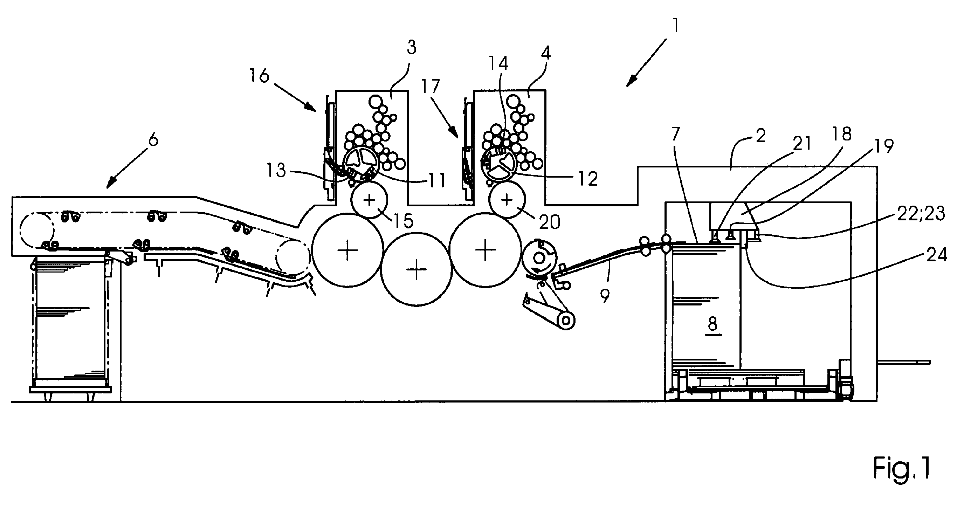

- Figur 1: eine Bogenrotationsdruckmaschine im Schnitt in schematischer Darstellung,
- Figur 2: eine Draufsicht auf die Druckmaschine mit Fördersystem für Bogenstapel,

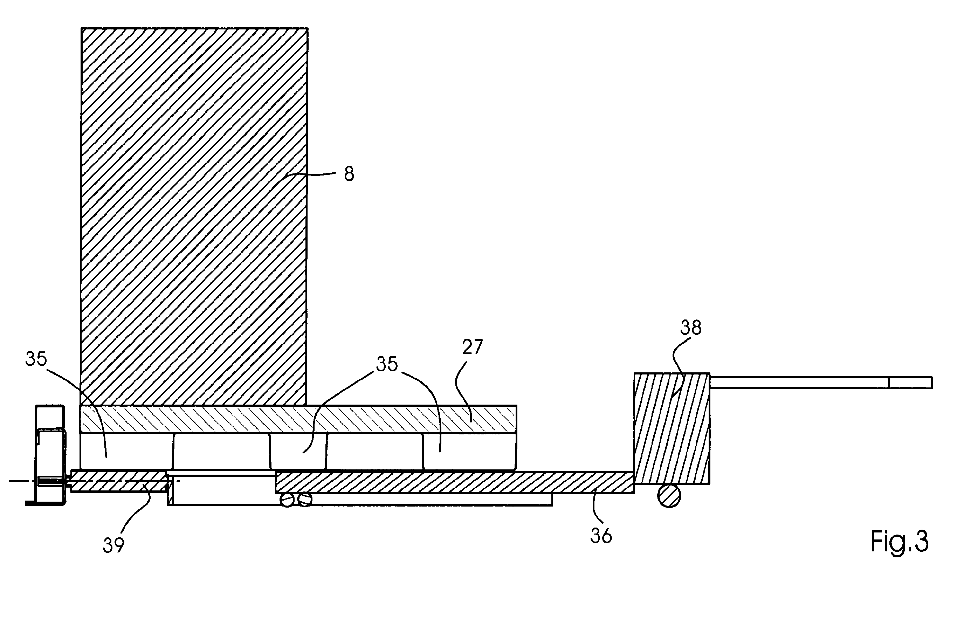

- Figur 3: den Übergabeförderer mit Palette und Bogenstapel im Schnitt in schematischer Darstellung,

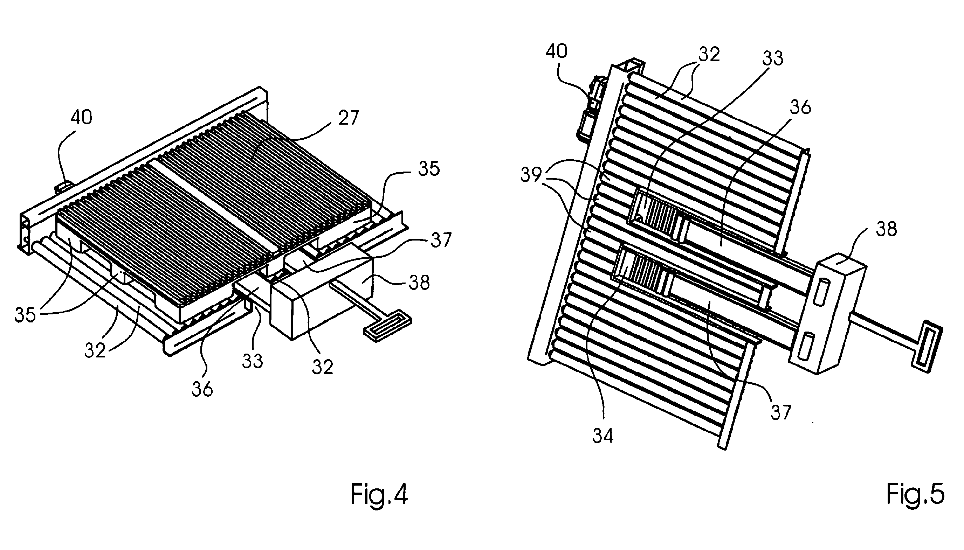

- Figur 4: einen Übergabeförderer in perspektivischer Ansicht von oben und
- Figur 5: den Übergabeförderer in perspektivischer Ansicht von unten.

Eine Bogen 7 verarbeitende Maschine, z. B. eine Druckmaschine 1, weist einen Anleger 2, mindestens ein Druckwerk 3 bzw. 4 und einen Ausleger 6 auf. Die Bogen 7 werden von einem Bogenstapel 8 entnommen und vereinzelt oder schuppenförmig über einen Zuführtisch 9 den Druckwerken 3 und 4 zugeführt. Diese enthalten in bekannter Weise jeweils einen Plattenzylinder 11, 12 und damit jeweils zusammenwirkende Gummituchzylinder 15, 20. Die Plattenzylinder 11 und 12 weisen jeweils eine Klemmvorrichtung 13, 14 zum Befestigen flexibler Druckplatten auf. Darüber hinaus ist jedem Plattenzylinder 11, 12 eine Vorrichtung 16, 17 für den halb- oder vollautomatischern Druckplattenwechsel zugeordnet.

Der Bogenstapel 8 liegt auf einer gesteuert anhebbaren Stapelplatte auf. Die Entnahme der Bogen 7 erfolgt von der Oberseite des Bogenstapels 8 mittels eines so genannten Saugkopfes 18, der unter anderem eine Anzahl von Hub- und Schleppsaugern 19, 21 für die Vereinzelung der Bogen 7 aufweist. Darüber hinaus sind Blaseinrichtungen 22 zur Auflockerung der oberen Bogenlagen und Tastelemente 23 zur Stapelnachführung vorgesehen. Zur Ausrichtung des Bogenstapels 8, insbesondere der oberen Bogen 7 des Bogenstapels 8 sind eine Anzahl von seitlichen und hinteren Anschlägen 24 vorgesehen.

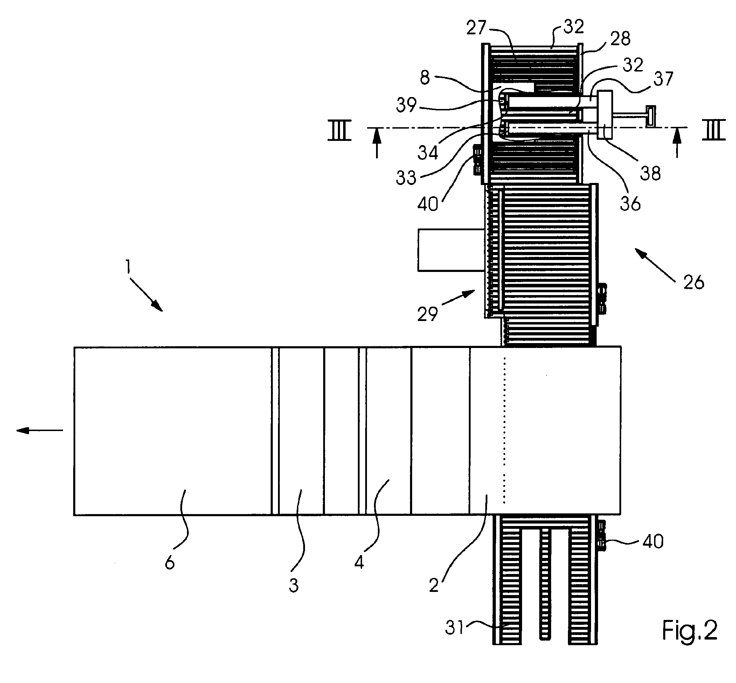

Dem Anleger 2 ist ein Fördersystem 26 zugeordnet, welches der Stapelplatte des Anlegers 2 Paletten 27 zu- und abfördert. Das Fördersystem 26 ist quer zur Bogenverarbeitungsrichtung (Pfeil in Figur 2) der Druckmaschine 1 angeordnet und besteht aus einem Übergabeförderer 28, einer Bogenstapelvorausrichtungsstation 29 und einem Ausschleuselement 31 für Paletten 27, z. B. Leerpaletten.

Der Übergabeförderer 28 weist eine Anzahl von antreibbaren Transportrollen 32 auf, die nebeneinander angeordnet sind und eine Transportebene für Paletten 27 bilden. Die Transportrollen 32 sind in ihrer axialen Ausrichtung parallel zur Bogentransportrichtung der Druckmaschine 1 angeordnet, so dass sich eine Transportrichtung für die Paletten 27 und dem auf der Palette angeordneten Bogenstapel 8 quer zur Bogentransportrichtung der Druckmaschine 1 ergibt. Durch diese Maßnahme werden die Bogenstapel 8 dem Anleger 2 seitlich zugeführt.

Der Übergabeförderer 28 weist in einem mittleren Bereich eine Aufnahme, vorzugsweise zwei parallel angeordnete in Achsrichtung der Rollen 32 weisende Aufnahmen 33, 34 für Tragelemente 36, 37, z. B. eine Hubwagengabel eines Hubwagens 38, auf. Zwischen den Aufnahmen 33, 34 sind Transportrollen 32 angeordnet, die den seitlich der Aufnahmen 33, 34 angeordneten Rollen 32 entsprechen. In einer Verlängerung der Aufnahmen 33, 34 sind jeweils verkürzte Transportrollen 39 angeordnet.

Die zu verarbeitenden Paletten 27 weisen vorzugsweise neun Stützfüße 35 auf. Diese werden beim Absetzen der Palette 27 auf den Übergabeförderer 28 von den Transportrollen 32 getragen. Beim Transport der Palette 27 gelangen jeweils zwei Stützfüße 35 in den Bereich der Aufnahmen 33, 34 und werden dort nicht abgestützt. Durch die Anordnung der gekürzten Transportrollen 39 werden jedoch immer mindestens sieben Stützfüße 35 der Palette 27 abgestützt.

Sämtliche Transportrollen 32, 39 weisen einen vorzugsweise gemeinsamen Antrieb 40 auf.

### Bezugszeichenliste

- 1: Druckmaschine
- 2: Anleger
- 3: Druckwerk
- 4: Druckwerk
- 5: ./.
- 6: Ausleger
- 7: Bogen
- 8: Bogenstapel
- 9: Zuführtisch
- 11: Plattenzylinder
- 12: Plattenzylinder
- 13: Druckplattenbefestigung
- 14: Druckplattenbefestigung
- 15: ./.
- 16: Druckplattenwechsler
- 17: Druckplattenwechsler
- 18: Saugkopf
- 19: Hubsauger
- 20: ./.
- 21: Schleppsauger
- 22: Blaseinrichtung
- 23: Tastelement
- 24: Anschlag
- 25: ./.
- 26: Fördersystem
- 27: Palette
- 28: Übergabeförderer
- 29: Bogenstapelvorausrichtstation
- 30: ./.
- 31: Ausschleusstation
- 32: Transportrolle
- 33: Aufnahme
- 34: Aufnahme
- 35: Stützfuß (27)
- 36: Tragelement (38)
- 37: Tragelement (38)
- 38: Hubwagen
- 39: Transportrolle (verkürzt)
- 40: Antrieb

## Patentansprüche

1. Vorrichtung zum Transport einer Palette (27), auf welcher ein Bogenstapel (8) gelagert ist, der einer Bogen (7) verarbeitenden Maschine (1) zugeführt wird, wobei diese einen Übergabeförderer (28) umfasst, welcher eine Anzahl von nebeneinander angeordneten Transportrollen (32) und mindestens eine Aufnahme (33) für ein Palette (27) tragendes Element (36-38) aufweist, wobei die Aufnahme (33) in axialer Ausrichtung der Transportrollen (32) bzw. parallel zu den Transportrollen (32) angeordnet ist.
**dadurch gekennzeichnet,**
**dass** in einem Verlängerungsbereich der Aufnahme (33; 34) verkürzte Transportrollen (39) angeordnet sind.

2. Vorrichtung nach Anspruch 1,
**dadurch gekennzeichnet,**
**dass** zwei parallel zueinander angeordnete Aufnahmen (33, 34) vorgesehen sind und dass zwischen den Aufnahmen (33, 34) mindestens eine weitere Transportrolle (32) angeordnet ist.

3. Vorrichtung nach Anspruch 1 oder 2,
**dadurch gekennzeichnet,**
**dass** sämtliche Transportrollen (32, 39) mittels eines Antriebes (40) antreibbar angeordnet sind.

4. Bogenrotationsdruckmaschine mit einer Vorrichtung gemäß einem der Ansprüche 1 bis 3.

## Claims

1. Device for transporting a pallet (27) which supports a stack of sheets (8) being supplied to a machine (1) processing sheets (7), the device comprising a transfer conveyor (28) which includes a number of transport rollers (32) arranged adjacent to each other and at least one receiving device (33) for an element (36-38) carrying a pallet (27), the receiving device (33) being arranged in axial orientation of the transport rollers (32) and in parallel with the transport rollers (32), respectively,
**characterized by**
the fact that shortened transport rollers (39) are provided in an extension region of the receiving device (33; 34).

2. Device according to Claim 1,
**characterized by**
the fact that two receiving devices (33, 34) arranged in parallel with each other are provided and at least one further transport roller (32) is provided between the receiving devices (33, 34).

3. Device according to Claim 1 or 2,
**characterized by**
the fact that all transport rollers (32, 39) are arranged in a way to be drivable by a drive (40).

4. Sheet-fed rotary printing press including a device according to any one of Claims 1 to 3.

## Revendications

1. Dispositif pour le transport d'une palette (27) sur laquelle est logée une pile de feuilles(8) qui est alimentée par une machine de traitement (1) de feuilles (7), celle-ci comprenant un convoyeur de transfert (28) présentant un nombre de rouleaux de transport (32) disposés les uns à côté des autres et au moins une réception (33) pour un élément (36-38) portant une palette (27), le dispositif de réception (33) étant disposé dans une orientation axiale des rouleaux de transport (32) respectivement parallèlement aux rouleaux de transport (32), **caractérisé en ce que** les rouleaux de transport raccourcis (39) sont disposés dans une zone de prolongement du dispositif de réception (33; 34).

2. Dispositif selon la revendication 1, **caractérisé en ce qu'**il est prévu deux dispositif de réception (33, 34) disposés parallèlement entre eux et **en ce qu'**au moins un autre rouleau de transport (32) est disposé entre les dispositifs de réception (33, 34).

3. Dispositif selon la revendication 1 ou 2, **caractérisé en ce que** tous les rouleaux de transport (32, 39) sont disposés de moyen à être entraînés par un entraînement (40).

4. Machine rotative d'impression de feuilles avec un dispositif conforme aux revendications 1 à 3.
